## Europäisches Patentamt

## European Patent Office

## Office européen des brevets

(11) Veröffentlichungsnummer: **0 039 414**
**B1**

(12) **EUROPÄISCHE PATENTSCHRIFT**

(45) Veröffentlichungstag der Patentschrift:
31.07.85

(51) Int. Cl.⁴: **F 16 B 23/00, B 25 B 15/00**

(21) Anmeldenummer: **81102529.5**

(22) Anmeldetag: **03.04.81**

(54) Schlitzschraube.

(30) Priorität: **02.05.80 DE 3016890**

(43) Veröffentlichungstag der Anmeldung:
**11.11.81 Patentblatt 81/45**

(45) Bekanntmachung des Hinweises auf die Patenterteilung:
**31.07.85 Patentblatt 85/31**

(84) Benannte Vertragsstaaten:
**AT BE CH FR GB IT LI NL SE**

(56) Entgegenhaltungen:
**AT - B - 195 189
AT - B - 349 271
DE - B - 2 826 933
FR - A - 1 250 642
GB - A - 1 526 225**

**Lueger, Lexikon der Technik, Band 8, S. 484
Spaethe-Trzebintowsky, Metallbearbeitung, Band 2, S. 74**

(73) Patentinhaber: **Elsenheimer, Wolfgang, Zum Sorpedamm 13, D-5768 Sundern 13 (DE)**

(72) Erfinder: **Dicke, Robert, Dipl.-Ing., Brinkerstrasse 4, D-5828 Ennepetal 13 (DE)**

(74) Vertreter: **Solf, Alexander, Dr. et al, Patentanwälte Dr. Solf & Zapf Postfach 13 02 19, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schlitzschraube mit einer spanlos geformten mittleren Vertiefung, die einen Vertiefungsgrund mit kreisförmiger Querschnittsfläche und vorzugsweise vier, radial hiervon nach außen gehende, um 90° gegeneinander versetzte Schlitze, deren äußere Wand Teil eines umgekehrten Kegelstumpfes ist, der koaxial zur Schraubenaxe liegt und dessen Grundfläche auf der Schraubenkopfoberfläche liegt sowie einen kreiszylindrischen Führungsabschnitt aufweist.

Aus der FR-PS 1 250 642 ist eine Schlitzschraube der eingangs genannten Art bekannt, deren in den Schraubenkopf eingebrachte, mittlere Vertiefung, die vier um 90° zueinander versetzte Schlitze und einen kreiszylindrischen Führungsabschnitt aufweist, durch Prägung oder Kaltfließpressen hergestellt ist. Mit derartigen Fertigungsmethoden lassen sich jedoch keine voll ausgeprägten Kanten an der in den Schraubenkopf eingebrachten Vertiefung erzielen, da durch das Fließen des Materials ein Materialabfall im Kantenbereich erfolgt. Insofern laufen die zwischen den Schlitzen ausgebildeten Kanten dieser bekannten Schlitzschraube in Richtung auf die Schraubenkopfoberfläche divergierend auseinander. Hierdurch ist die mittlere Vertiefung nicht geeignet, um eine Abdeckkappe sicher aufzunehmen, da die Kanten aus den obengenannten Gründen zur Schraubenkopfoberfläche hin auseinanderlaufen und somit keine Haltewirkung für einen zylindrischen Ansatz der Abdeckekappe entfalten können und der für eine Halterung zur Verfügung stehende zylindrische Führungsabschnitt viel zu kurz ist, um einen festen Halt der Abdeckkappe zu gewährleisten.

Aus der DE-AS 2 826 933 ist eine Kreuzschlitzschraube bekannt, die zur Aufnahme einer Abdeckkappe geeignet ist. Diese Abdeckkappe dient zum Verdecken des Schraubenkopfes und weist einen zylindrischen Ansatz auf, mit dem sie innerhalb des Schraubenkopfes gehalten wird. Bei der aus der DE-AS 2 826 933 bekannten Kreuzschlitzschraube erfolgt die Halterung des Ansatzes dadurch, daß zwischen den Schlitzen Ausprägungen vorhanden sind, die zur Achse der Schraube parallele Mantelflächen von Zylinderabschnitten sind, deren Zylinderachsen auf der Winkelhalbierenden zwischen je zwei einander peripher benachbarten Einzelschlitzen radial aus der Schraubenachse nach außen heraus versetzt sind und deren jeweils die seitliche Begrenzung ergebende Erzeugende durch eine scharfe Kante gegeben ist, die zugleich eine achsparallele Begrenzung der angrenzenden Seitenwandung in Richtung auf die Schraubenachse bildet. Durch diese Ausbildung des Kreuzschlitzes ist der zylindrische Ansatz der Abdeckkappe unmittelbar in diesen einsetzbar und dort verankerbar. Hierbei wird eine relativ feste Verankerung der Kappe bei großen und tiefen Kreuzschlitzgrößen erreicht, jedoch bei kleinen, flachen Kreuzschlitzen, beispielsweise bei Schrauben im Durchmesserbereich von 3,5 bis 5.0 mm, ist der Führungsbereich für einen ausreichend sicheren Sitz zu kurz.

Um eine Führung und eine Aufnahme für den zylindrischen Ansatz der Abdeckkappe bei Kreuzschlitzschrauben zu schaffen, ist es weiterhin bekannt, eine im Kaltstauchverfahren hergestellte Schraube in einem zweiten, gesonderten Arbeitsgang spanend, beispielsweise durch Bohren, mit einer angepaßten Bohrung in Verlängerung des Kreuzschlitzes zu versehen. Dies ist aber einerseits unwirtschaftlich und andererseits fertigungsmäßig kritisch, weil das Ansetzen des Bohrers sehr exakt zwischen der Kreuzschlitz-Profilierung erfolgen muß, um ein Verlaufen oder einen Bruch zu verhindern. weil durch die Innenkante des Kreuzschlitzes das Bohrwerkzeug eine Spanunterbrechung erfährt und dadurch bruchanfällig wird.

Aus der AT-PS 349 271 ist eine Schlitzschraube bekannt, die eine mittlere Vertiefung mit vier um 90° zueinander versetzten Schlitzen und V-förmigen Einsschnitten zwischen den Schlitzen aufweist, deren an die Schlitze angrenzende Kanten in Richtung auf die Schraubenkopfoberfläche divergieren. Insofern ist die mittlere Vertiefung dieser bekannten Schlitzschraube nicht für die Aufnahme einer Abdeckkappe geeignet.

Aus der AT-PS 195 189 ist eine Schlitzschraube bekannt, die eine mittlere Vertiefung aufweist. Die mittlere Vertiefung wird von vier um 90° zueinander versetzten Schlitzen und einer koaxial zur Schraubenlängsachse verlaufenden Bohrung gebildet. Die Bohrung ist im Durchmesser kleiner als der Abstand der sich jeweils diametral gegenüberliegenden Kanten der Schlitze ausgebildet. Die Bohrung dient der Aufnahme eines Führungsstiftes eines Schraubendrehers, um diesen in der Vertiefung zu zentrieren. Eine Abdeckkappe ist für diese bekannte Schlitzschraube nicht vorgesehen.

Der vorliegenden Erfindung liegt die Aufgabe zugrunde, eine Schlitzschraube der eingangs genannten Art derart zu verbessern, daß eine in die Vertiefung eingesetzten Abdeckkappe bei jeder Schlitzgröße und -tiefe einen sicheren Halt findet und zur Herstellung der Schraube keine zusätzlichen Fertigungsarbeitsgänge erforderlich sind.

Diese Aufgabe wird erfindungsgemäß dadurch gelöst, daß der Durchmesser der kreisförmigen Querschnittsfläche der mittleren Vertiefung gleich dem Durchmesser der Kopffläche des den Schlitzen zugeordneten Kegelstumpfes ist und zwischen den Schlitzen etwa V-förmige Täler eingeprägt sind und die benachbarten Seitenwände der Schlitze und der Täler jeweils gemeinsame Kanten bilden, die auf einer zylindrischen Mantelfläche liegen, deren Durchmesser dem Durchmesser des Führungsabschnittes entspricht.

Durch die erfindungsgemäße Ausbildung dienen die Kanten, die zwischen den Wänden der Schlitze und denen der V-förmigen Täler liegen, als Führungsmittel für den Zapfen einer in die Vertiefung einzusetzenden Abdeckkappe. Da durch den zusätzlichen Stauchvorgang bei der Ausbildung der Täler der Materialabfall an den Kanten verhindert wird, sind diese Kanten voll ausgeprägt und können damit in ihrem gesamten Bereich auf einer Zylindermantelfläche liegen, deren Durchmesser dem Durchmesser des Führungsabschnittes entspricht. Somit wird der Führungsabschnitt nach oben in den Kreuzschlitz verlängert, und durch die Kanten wird eine zusätzliche Halterung des zylindrischen Ansatzes der Kappe erreicht. Ferner wird die Vertiefung spanlos, insbesondere durch Fließpressen, erzeugt. Hierbei wird der Führungsabschnitt beim Stauchen des Kreuzschlitzes gleichzeitig mitgeformt, so daß sich eine äußerst kostengünstige Herstellung ergibt, da kein separater Arbeitsgang zum Formen des Führungsbereiches erforderlich ist. Durch die erfindungsgemäße Ausgestaltung der Vertiefung wird ein bis jetzt bestandenes fertigungstechnisches Problem beseitigt, mit dem es im Zuge der Kreuzschlitz-Kopfausbildung nicht möglich sein soll, eine zylindrische Anstauchung zur Aufnahme einer Abdeckkappe auszubilden, wie dieses in der DE-AS 2 826 933 ausgeführt ist. Die Ausbildung der Grundform des Schlitzes erfolgt in üblicher Weise, so daß sämtliche bekannten, insbesondere Kreuzschlitz-Schraubendreherwerkzeuge Verwendung finden könnten. Die erfindungsgemäße Ausgestaltung geht von der Erkenntnis aus, daß es ausreicht, dem Führungsabschnitt eine Länge zu geben, die etwa bis zu 100% der Tiefe des Kreuzschlitzes entspricht, vorzugsweise 40%—60% der Kreuzschlitztiefe beträgt. Die auftretenden Flächenreibungen werden somit in einem derartigen Größenbereich gehalten, daß der Preßstempel nach Abschluß des Preßvorganges noch aus dem formgestauchten Gegenstand herausgezogen werden kann.

Da die Kopffläche des Kegelstumpfes, dessen Kegelstumpfmantelfläche den äußeren Wänden des Kreuzschlitzes zugeordnet ist, den Anfang des Führungsschnittes bildet, wird durch diese Ausgestaltung der Kreuzschlitz selbst nicht verkürzt, so daß ein voller Eingriff für das einzusetzende Schraubendreherwerkzeug zur Verfügung steht. Weiterhin dient die Ausbildung der V-förmigen Täler, die an sich bekannt sind, dazu, daß einbringbare Drehmoment zu vergrößern, indem durch zusätzliche Stauchung der Materialabfall im Bereich der oberen Kanten der seitlichen Berandung der Einzelschlitze vermindert wird.

Erfindungsgemäß kann es weiterhin von Vorteil sein, wenn der Talgrund der V-förmigen Täler auf einer zur Schraubenachse koaxial verlaufenden Mantelfläche eines umgekehrten Kegelstumpfes liegt, dessen Grundfläche einen kleineren Durchmesser als die Grundfläche des den Schlitzen zugeordneten Kegelstumpfes und dessen Kopffläche einen dem Durchmesser des Führungsabschnittes entsprechenden Durchmesser besitzt, und dessen Kopffläche oberhalb oder unterhalb der Kopffläche des den Schlitzen zugeordneten Kegelstumpfes liegt. Wenn die Kopffläche des den Tälern zugeordneten Kegelstumpfes unterhalb des den Schlitzen zugeordneten Kegelstumpfes liegt, wird eine erhöhte Verfestigung der Kanten zwischen den Tälern und den Schlitzen im unteren Bereich erreicht. Diese Ausbildung der erfindungsgemäßen Schraube erhöht die Festigkeit der Kreuzschlitzkanten, ohne die Halterungseigenschaften für die Kappe zu beeinträchtigen.

Die vorliegende Erfindung löst somit optimal das Problem, den Schlitz im Schraubenkopf mit einer Abdeckkappe, bestehend aus einem Kopf mit zylindrischen Ansatz, verschließen zu können, da dem zylindrischen Ansatz eine relativ lange Führung durch die Kanten zwischen den V-förmigen Tälern im Schlitz zur Verfügung steht, in der er im Preßsitz gehalten wird. Darüber hinaus ermöglicht die Erfindung durch die besondere Anpassung des Führungsabschnittes an den Schlitzbereich, indem die Kopffläche des umgekehrten Kegelstumpfes und die Querschnittsfläche des Führungsabschnittes aufeinanderfallen und den gleichen Durchmesser besitzen, daß hier ein fließender Übergang zwischen dem Bereich des Schlitzes und dem Führungsabschnitt vorhanden ist, wodurch das entsprechend geformte Werkzeug höhere Standzeiten besitzt und das Kaltfließpressen beider Abschnitte in einem Arbeitsgang mit ein- und demselben Werkzeug möglich wird.

Anhand des in den Zeichnungen dargestellten Ausführungsbeispiels einer erfindungsgemäßen Kreuzschlitzschraube wird die Erfindung näher erläutert. Es zeigt

Fig. 1 eine Aufsicht auf eine erfindungsgemäße Kreuzschlitzschraube,

Fig. 2 einen Schnitt entlang der Schnittlinie II-II in Fig. 1,

Fig. 3 einen Schnitt entlang der Schnittlinie III-III in Fig. 1.

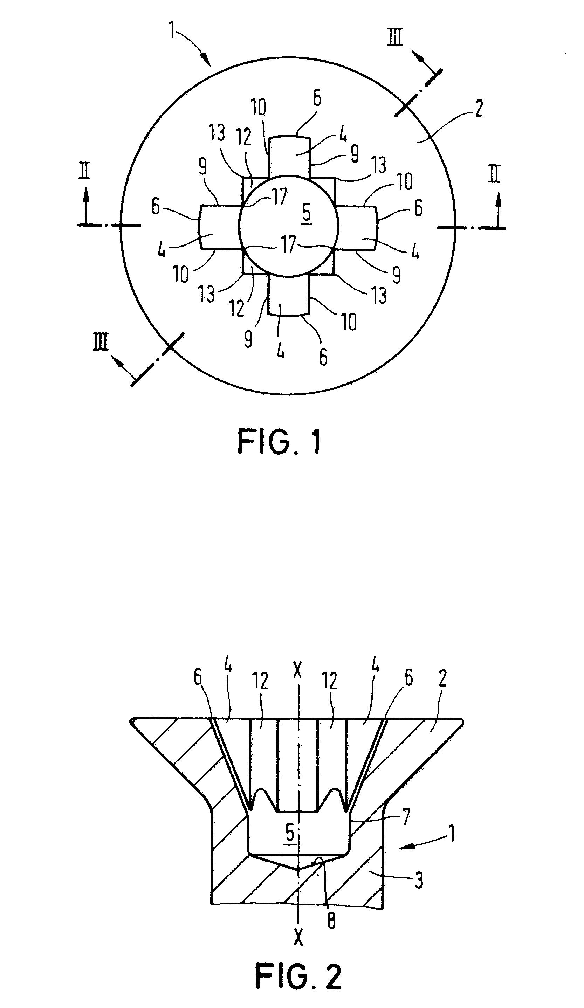

Im dargestellten Ausführungsbeispiel handelt es sich um eine Kreuzschlitzschraube 1 mit einem Schraubenkopf 2, der beispielsweise als kegelstumpfförmiger Senkkopf ausgebildet ist. An den Kopf 2 schließt sich ein Schraubenschaft 3 an. Im Schraubenkopf 2 ist ein Kreuzschlitz aus vier jeweils um 90° zueinander versetzten, radialen Schlitzen 4 ausgebildet. Die Schlitze 4 sind axialsymmetrisch in bezug auf die Schraubenlängsachse XX, siehe Fig. 2, angeordnet. Die Schlitze 4 enden in einer mittleren Vertiefung 5. Die Schlitze 4 weisen äußere Wände 6 auf, die Teil eines umgekehrten Kegelstumpfes sind, der koaxial zur Schraubenachse XX und dessen Grundfläche auf der Oberfläche des Schraubenkopfes 2 liegt. Das Ende der äußeren Wände 6 liegt auf einem Kreis, der den Umfang der Kopffläche des den Schlitzen 4 zugeordneten Kegelstumpfes bildet. An den durch die Schlitze 4 gebildeten Kreuzschlitzbereich schließt sich ein zylindrischer Führungsabschnitt 7 an, dessen Durchmesser dem Durchmesser der Kopffläche des Kegelstumpfes entspricht. Die Tiefe des Führungsabschnittes 7 kann insbesondere etwa 40 bis 60% der Tiefe des Kreuzschlitzbereichs betragen. Maximal entspricht die Tiefe etwa der Länge des Kreuzschlitzes. Am Ende des Führungsabschnittes 7 ist ein stumpfkegeliger Vertiefungsgrund 8 ausgebildet. Der Führungsabschnitt 7 dient zur Aufnahme eines nicht dargestellten zylindrischen Fortsatzes einer ebenfalls nicht gezeigten Abdeckkappe, mit der der Kopf 2 der Schraube 1 von außen abgedeckt werden kann und die mittels des zylindrischen Ansatzes innerhalb des Kreuzschlitzes bzw. des Führungsabschnittes 7 gehalten wird. Jeder Schlitz weist gegenüberliegende Seitenwände 9, 10 auf. Die äußeren Wände 6 weisen zudem eine leichte Krümmung auf, da sie auf der Kegelfläche liegen. Der Scheitelwinkel des Kegelstumpfes kann z. B. zwischen 20° und 60° liegen. Die Seitenwände 9, 10 liegen etwa in parallelen Ebenen, wobei sie tatsächlich etwas ein- und abwärts geneigt ausgebildet sind, was erforderlich ist, um den Stauchstempel des Kreuzschlitzes nach dem Stauchvorgang wieder herausziehen zu können.

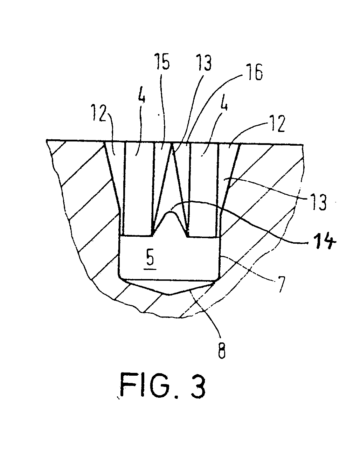

Zwischen den Schlitzen 4 sind jeweils V-förmige Täler 12 eingeprägt. Diese Täler 12 dienen dazu, einen Materialabfall an den Kanten der Schlitze zu verhindern. Der Talgrund 13 der Täler 12 liegt auf der Mantelfläche eines umgekehrten Kegelstumpfes, siehe Fig. 3. Der Durchmesser der Kegelstumpf-Grundfläche ist jedoch kleiner als der Durchmesser der Kegelstumpf-Grundfläche des den Schlitzen 4 zugeordneten Kegelstumpfes wie dies insbesondere auch aus der Fig. 1 ersichtlich ist. Die Kegelstumpf-Kopffläche des den Tälern 12 zugeordneten Kegelstumpfes liegt oberhalb der kleineren Kegelstumpffläche des den Schlitzen 4 zugeordneten Kegelstumpfes, so daß die Täler 12 oberhalb der Schlitze 4 in der mittleren Vertiefung 5 enden. Es liegt aber ebenfalls im Rahmen der Erfindung, wenn die Kopffläche des den Tälern zugeordneten Kegelstumpfes unterhalb der Kopffläche des den Schlitzen zugeordneten Kegelstumpfes liegt. Das Ende der Täler 12 liegt wiederum auf einem Kreis, dessen Durchmesser dem Durchmesser des Führungsabschnittes entspricht. Der Talgrund 13 der Täler 12 erweitert sich vom oberen Ende der Täler nach unten hin und besitzt einen bogenförmigen Verlauf, so daß sich ein etwa parabelförmiger Übergang 14 der Täler 12 zur mittleren Vertiefung 5 ergibt. Entsprechend der nach unten hin sich ergebenden Erweiterung des Talgrundes 13 ergibt sich ein nach unten hin spitzer Verlauf der Seitenwände 15, 16 der Täler 12. Der Scheitelwinkel des den Tälern 12 zugeordneten Kegelstumpfes ist vorzugsweise kleiner als der des den Schlitzen 4 zugeordneten Kegelstumpfes. Die Seitenwände 9, 10 der Schlitze 4 bilden mit den jeweilig benachbarten Seitenwänden 15, 16 der Täler 12 Kanten 17, die auf einer zylindrischen Mantelfläche liegen, deren Durchmesser dem Durchmesser des Führungsabschnittes 7 entspricht. Diese Kanten stellen ebenfalls eine Führung und Halterung für den Kappenansatz dar.

## Patentansprüche

1. Schlitzschraube (1) mit einer spanlos geformten, mittleren Vertiefung (5), die einen Vertiefungsgrund (8) mit kreisförmiger Querschnittsfläche und vorzugsweise vier, radial hiervon nach außen gehende, um 90" gegeneinander versetzte Schlitze (4), deren äußere Wand (6) Teil eines umgekehrten Kegelstumpfes ist, der koaxial zur Schraubenachse (x-x) liegt und dessen Grundfläche auf der Schraubenkopfoberfläche liegt, sowie einen kreiszylindrischen Führungsabschnitt (7) aufweist, dadurch gekennzeichnet, daß der Durchmesser der kreisförmigen Querschnittsfläche der mittleren Vertiefung (5) gleich dem Durchmesser der Kopffläche des den Schlitzen (4) zugeordnete Kegelstumpfes ist und zwischen den Schlitzen (4) etwa V-förmige Täler (12) eingeprägt sind und die benachbarten Seitenwände (9, 10 bzw. 15, 16) der Schlitze (4) und der Täler (12) jeweils gemeinsame Kanten (17) bilden, die auf einer zylindrischen Mantelfläche liegen, deren Durchmesser dem Durchmesser des Führungsabschnittes (7) entspricht.

2. Schlitzschraube nach Anspruch 1, dadurch gekennzeichnet, daß der Talgrund (13) der V-förmigen Täler (12) auf einer zur Schraubenachse (x-x) koaxial verlaufenden Mantelfläche eines umgekehrten Kegelstumpfes liegt, dessen Grundfläche einen kleineren Durchmesser als die Grundfläche des den Schlitzen (4) zugeordneten Kegelstumpfes und dessen Kopffläche einen dem Durchmesser des Führungsabschnittes (7) entsprechenden Durchmesser besitzt, und diese Kopffläche oberhalb oder unterhalb der Kopffläche des den Schlitzen (4) zugeordneten Kegelstumpfes liegt.

## Claims

1. Cross recessed screw (1) having a forged central hole (5) with a base (8) having a circular cross-sectional area, and preferrably four slots arranged radially around said central hole (5) and staggered by 90° with respect to each other, where the outer wall (6) of the slots forms a part of an inverted truncated cone, which is coaxial with the axis (x-x) of the screw and the base of which lies on the surface of the screw head, as well as having a cylindrical guide zone (7), characterized in that the diameter of the cross-sectional area of the central hole (5) is equal to the diameter of the top face of the truncated cone which is associated with said slots (4) and that there are approximately V-shaped valleys (12) between the slots (4) and that the neighbouring side-walls (9, 10 or 15, 16) of said slots (4) and said valleys (12) form common edges (17) respectively which are located on a cylindrical generated surface whose diameter corresponds to the diameter of said guide zone (7).

2. Screw according to claim 1, characterized in that said base (13) of the valley is located on a generated surface of an inverted truncated cone

which is coaxial with the screw axis (x-x), and the base of this inverted truncated cone has a smaller diameter than the base of the truncated cone which is associated with said slots (4), and the diameter of its top face corresponds to the diameter of said guide zone (7), and this top face is above or below the top face of the truncated cone which is associated with said slots (4).

## Revendications

1. Vis à tête fraisée (1) comportant une empreinte médiane (5) forgée à froid qui comporte un fond (8) ayant une surface de section transversale circulaire, et de préférence, quatre fentes en partant radialement vers l'extérieur (4), diposées à 90° l'une de l'autre, dont la paroi extérieure (6) fait partie d'un tronc de cône inversé coaxial à l'axe (x-x) de la vis et dont la surface de base se trouve sur la surface de la tête de vis, ainsi qu'une portion de guidage (7) cylindrique circulaire, caractérisée en ce que le diamètre de la surface de la section transversale circulaire de la cavité médiane (5) est égal au diamètre de la surface du sommet du tronc de cône associé aux fentes (4), qu'entre les fentes (4) sont matricés des sillons (12) sensiblement en forme de V et que les parois latérales voisines (9, 10 et 15, 16) des fentes (4) et des sillons (12) constituent respectivement des arêtes (17) qui se trouvent sur une surface latérale cylindrique, dont le diamètre correspond au diamètre de la portion de guidage (7).

2. Vis à tête fraisée selon la revendication 1, caractérisée en ce que le fond (13) des sillons (12) en forme de V se trouve sur une surface latérale, coaxiale à l'axe (x-x) de la vis, d'un tronc de cône inversé, dont la surface de base a un plus petit diamètre que la surface de base du tronc de cône associé aux fentes (4) et dont la surface du sommet a un diamètre correspondant au diamètre de la portion de guidate (7), et que cette surface de sommet se trouve au-dessus ou en dessous de la surface de sommet du tronc de cône associé aux fentes (4).

FIG. 1

FIG. 2

FIG. 3